# FASCICULE DE BREVET EUROPEEN

(11) **EP 1 232 852 B1**
(45) Date de publication et mention de la délivrance du brevet: **27.09.2006**
(21) Numéro de dépôt: 02002957.5
(22) Date de dépôt: 11.02.2002
(51) Int. Cl.: B29D 30/06

(54) **Moule et procédé de moulage d'une bande de roulement**
Formwerkzeug und Verfahren zum Formen einer Reifenlauffläche
Mould and method for moulding a tyre tread

(30) Priorité: 20.02.2001 FR 0102437
(43) Date de publication de la demande: 21.08.2002
(73) Titulaire: Société de Technologie Michelin, 63000 Clermont-Ferrand Cedex 09 (FR); MICHELIN RECHERCHE ET TECHNIQUE S.A., 1763 Granges-Paccot (CH)
(72) Inventeur: Aperce, Jean-Claude, 63430 Pont-du-Chateau (FR); Menard, Gilbert, 63530 Volvic (FR); Merino Lopez, Jose, 63200 Riom (FR)
(74) Mandataire: Bauvir, Jacques

(56) Documents cités:
- EP-A- 1 103 362
- WO-A-98/54009
- US-A- 1 599 772
- US-A- 1 733 064

## Description

La présente invention se rapporte aux moules et aux procédés de moulage de bandes de roulement. En particulier, elle concerne les moules et les procédés permettant le moulage de pneumatiques dont la bande de roulement comporte des fentes, canaux ou autres évidements s'étendant sensiblement transversalement à la bande de roulement et débouchant sur les faces latérales de cette même bande de roulement. Ces évidements ne débouchent pas ou pas totalement sur la surface de roulement de la bande de roulement lorsqu'elle est neuve. On parle de bande de roulement à sculpture évolutive car au fur et à mesure de son usure et de l'apparition des canaux "souterrains", le profil visible, et donc actif, de la bande de roulement évolue. Un intérêt de telles bandes de roulement est, par exemple, de permettre des performances sensiblement constantes tout au long de l'usure normale en service. La demande de brevet WO98/54009 décrit de tels concepts.

Différents procédés de moulage liés à différentes technologies de moules permettent de réaliser ces formes particulières de bandes de roulement. Lorsque l'on met en oeuvre de tels procédés de manière industrielle, deux difficultés importantes doivent être surmontées : d'une part, réussir le moulage, c'est à dire la création sans défaut (visible ou non) d'un pneumatique comportant des canaux axiaux dans la bande de roulement et d'autre part, permettre le démoulage, c'est à dire la séparation du pneumatique moulé des éléments constituant le moule sans risquer d'endommager ni le pneumatique ni l'outillage.

Le document WO98/54009 décrit un tel procédé et un moule permettant ce procédé. Les canaux axiaux de la bande de roulement sont moulés par des doigts solidaires des coquilles prévues pour mouler les flancs du pneumatique. Lors du moulage, la pression interne au pneumatique cru, donc déformable plastiquement, exercée par la membrane provoque l'augmentation du diamètre extérieur du pneumatique cru. Cette étape appelée "conformation" permet que la matière constituant la bande de roulement crue vienne remplir tous les espaces du moule pour créer la bande de roulement finale comportant les différents sillons et évidements que l'on peut voir déboucher à la surface de roulement ou aux épaules. Lors du démoulage, les coquilles sont écartées axialement ce qui permet l'extraction des doigts de la bande de roulement. Les segments de la couronne sommet, qui moulent la surface de roulement, sont écartés radialement pour permettre de dégager leurs parties saillantes (les projections qui moulent les sculptures) de la bande de roulement du pneumatique moulé.

Un problème de ce procédé est qu'il est, de fait, réservé aux fabrications dans lesquelles la conformation est relativement importante car elle doit correspondre au minimum à l'épaisseur de la sculpture prévue, y compris les canaux sous-jacents. En effet, les doigts étant portés par les coquilles moulant les flancs, leur position radiale est fixe. Pour pouvoir être chargé dans le moule, le pneumatique cru doit donc avoir un diamètre extérieur lui permettant de se positionner (radialement) à l'intérieur des doigts. Ensuite, l'augmentation de diamètre (ou conformation) provoquée par exemple par le gonflage d'une membrane de vulcanisation doit être suffisante pour faire pénétrer la matière de moulage autour des doigts et dans tous les espaces de la bande de roulement.

Pourtant, la tendance de l'industrie est de chercher à limiter au maximum l'importance de la conformation. Ceci pour au moins deux raisons. Une première raison est l'objectif d'une meilleure uniformité des pneumatiques moulés. En effet, plus la conformation est importante, plus il est difficile d'obtenir une répartition régulière de la matière de moulage qui flue lors de la mise en pression du pneumatique cru. Une deuxième raison est l'emploi d'architectures (ou de renforts) de pneumatiques de plus en plus rigides (inextensibles) pour améliorer certaines performances des pneumatiques (par exemple à vitesse élevée). Ces architectures sont par conséquent de moins en moins susceptibles d'extension et donc susceptibles de conformation.

Un autre procédé connu (décrit par exemple dans le document US 1 733 064) consiste à introduire les doigts ou aiguilles axialement dans la gomme crue de la bande de roulement. Cette méthode se heurte alors à d'autres limitations : la géométrie et la résistance des doigts ou aiguilles doit permettre leur pénétration sans risquer d'endommager l'outil mais aussi sans déplacer ni déformer de manière gênante le pneumatique cru. En pratique, cette technique est donc limitée à des doigts de géométrie simple et d'épaisseur suffisante pour résister au flambement. D'autre part, la cinématique nécessaire au contrôle des mouvements de ces doigts constitue également une limitation importante des formes possibles.

L'objectif de l'invention est donc un moule et un procédé permettant à la fois une fabrication à faible conformation (voire sans aucune conformation) et qui ne souffrirait pas des limitations susmentionnées.

Cet objectif est atteint par un moule pour pneumatique dont la bande de roulement comporte une surface de roulement, des surfaces latérales, des évidements radiaux débouchant à ladite surface de roulement et des évidements axiaux débouchant sur l'une au moins desdites surfaces latérales, ledit moule comprenant une première série de secteurs de couronne destinés à mouler les évidements radiaux, une deuxième série de secteurs d'épaule parmi lesquels au moins certains portent des projections destinées à mouler les évidements axiaux, les secteurs de couronne étant mobiles radialement entre une configuration ouverte permettant le chargement du pneumatique cru dans le moule et une configuration fermée permettant le moulage du pneumatique, ledit moule étant caractérisé en ce que les secteurs d'épaule sont mobiles radialement, entre la configuration ouverte et la configuration fermée, de manière indépendante des secteurs de couronne.

En effet, le moule de l'invention permet, par la mobilité radiale des éléments moulant les canaux ou évidements transversaux souterrains, à la fois un chargement du pneumatique cru sans contrainte du fait de la présence de ces éléments, un moulage à conformation faible voire nulle et un démoulage sans difficulté.

De préférence, les projections portées par les secteurs d'épaule ont la forme de doigts et s'étendent sensiblement axialement en saillie desdits secteurs, de préférence sur une distance supérieure à 10%, ou de préférence encore supérieure à 25%, de la largeur des secteurs de couronne.

Dans un mode de réalisation préféré, lesdits doigts prennent appui, au cours du mouvement de fermeture, sur les secteurs de couronne afin de résister à la pression exercée par la matière de moulage sur les doigts lors d'un mouvement de fermeture du moule et/ou de conformation.

Dans un mode de réalisation particulier, lesdits doigts s'étendent selon une direction généralement oblique par rapport à l'axe du pneumatique. Dans ce cas, la deuxième série de secteurs d'épaule est de préférence capable d'un mouvement de rotation autour de l'axe du pneumatique pour faciliter le démoulage.

L'invention concerne également un procédé de moulage d'une bande de roulement comportant une surface de roulement, des surfaces latérales, des évidements axiaux débouchant axialement sur l'une au moins desdites surfaces latérales, ledit procédé consistant à introduire, dans la bande de roulement crue, des projections moulant les évidements axiaux et à les extraire ensuite de la bande de roulement vulcanisée, lesdites projections étant introduites dans le sens de l'épaisseur de la bande de roulement et extraites dans le sens de la largeur de la bande de roulement. Le fait d'introduire les projections, au moins en partie par un mouvement radial de celles-ci indépendant de la conformation éventuelle, dans la gomme crue permet en effet de réduire ou même de rendre inutile la conformation. Le fait d'extraire ensuite les projections selon le sens de la largeur de la bande de roulement moulée (c'est à dire le sens de l'axe du pneumatique auquel elle est destinée) permet un démoulage sans dégradation même lorsque la longueur des projections est importante.

De préférence, le procédé de l'invention utilise un moule tel que décrit plus haut et comprend successivement les étapes suivantes :
■ Introduction d'un pneumatique cru dans ledit moule en configuration ouverte,
■ Fermeture du moule par mouvement centripète des secteurs de couronne et secteurs d'épaule,
■ Moulage du pneumatique,
■ Ouverture du moule par mouvement radial des secteurs de couronne afin de démouler les évidements radiaux, les secteurs d'épaule demeurant sensiblement en configuration fermée,
■ Poursuite de l'ouverture par mouvement axial des secteurs d'épaule.

De préférence, dans ce procédé, le diamètre du pneumatique cru est inférieur d'une valeur "d" au diamètre du pneumatique moulé, d étant inférieure à 1% du diamètre du pneumatique moulé.

L'invention sera mieux comprise grâce à la description des dessins.

La figure 1 représentent schématiquement en coupe radiale une partie d'un moule en configuration ouverte ainsi que la partie correspondante d'un pneumatique moulé selon l'invention.

La figure 2 représentent schématiquement en coupe radiale une partie d'un moule en configuration ouverte lors de la première étape du procédé, c'est à dire le chargement d'un pneumatique cru.

La figure 3 représentent schématiquement en coupe radiale une partie d'un moule en configuration fermée lors de la deuxième étape du procédé de moulage de l'invention.

La figure 4 représentent schématiquement en coupe radiale une partie d'un moule en configuration fermée lors de la troisième étape (optionnelle) du procédé de l'invention.

La figure 5 représentent schématiquement en coupe radiale une partie d'un moule en configuration partiellement ouverte lors de la quatrième étape du procédé de l'invention.

La figure 6 représentent schématiquement en coupe radiale une partie d'un moule en configuration partiellement ouverte lors de la cinquième étape du procédé de l'invention.

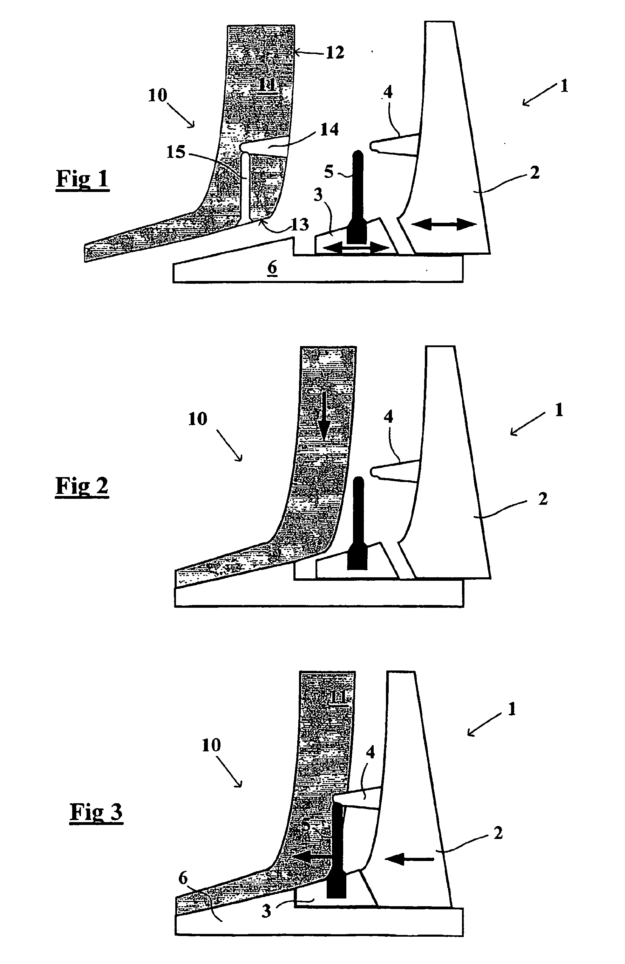

Sur la figure 1, on a représenté le moule 1 de l'invention dans sa configuration ouverte. afin de mieux comprendre les différentes fonctions des éléments décrits, on a représenté également une portion correspondante d'un pneumatique 10 obtenu par ce moule 1. Sur cette vue partielle en coupe, on reconnaît un secteur de couronne 2 portant un relief 4 pour mouler un évidemment ou sillon 14 de la bande de roulement 11 du pneumatique 10. Ce secteur de couronne 2 est mobile radialement par rapport à la coquille 6 moulant les flancs du pneumatique 10 de manière connue en soi. La surface de moulage de l'épaule 13 du pneumatique est définie au moins en partie par une série d'éléments semblables au secteur d'épaule 3 visible ici. Celui-ci porte une projection 5 apte à définir des canaux ou évidements 15 sous la surface de roulement 12 du pneumatique. Le secteur d'épaule 3 est également mobile radialement par rapport à la coquille 6 et au secteur de couronne 2 afin de permettre le déroulement du procédé selon l'invention.

La figure 2 représente la première étape du procédé de l'invention où un pneumatique 10 cru est introduit dans le moule en configuration d'ouverture telle que décrite à la figure 1. On constate ici que la mobilité radiale du secteur d'épaule 3 permet un diamètre de pneumatique cru supérieur à l'état de la technique tel que décrit plus haut.

La deuxième étape du procédé est représentée à la figure 3. Le moule prend sa configuration fermée dans laquelle les secteurs de couronne 2 et d'épaule 3 viennent pénétrer radialement la gomme crue de la bande de roulement 11 (les flèches montrent le mouvement des éléments par rapport à l'étape précédente).

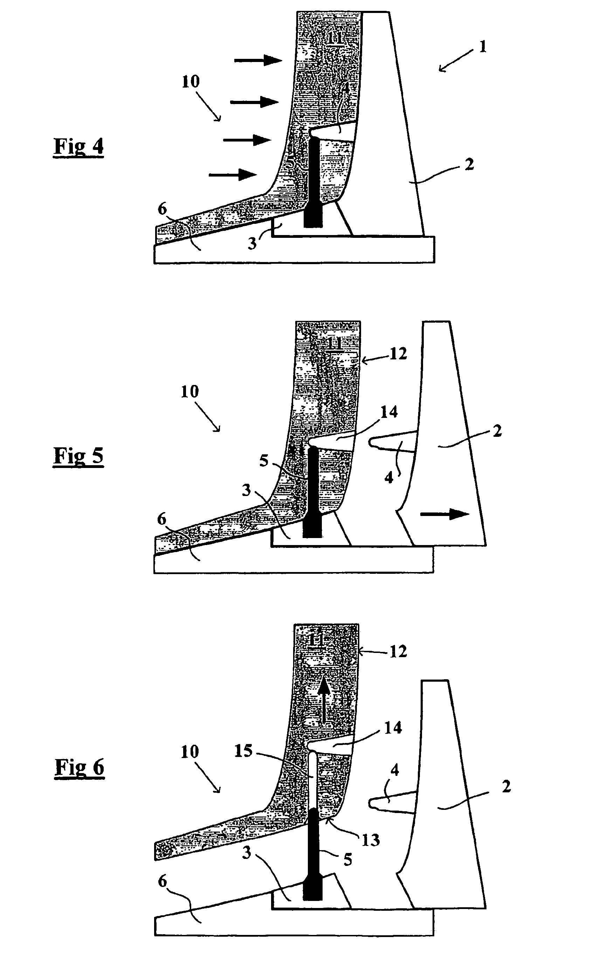

La troisième étape du procédé, représentée en figure 4, est celle de la conformation. Bien que cette étape soit présentée comme successive à la précédente, elle peut naturellement débuter pendant la deuxième étape (afin par exemple de raccourcir le cycle et/ou d'exercer une contre pression lors du mouvement des secteurs mobiles). Lors de la conformation, on gonfle, en général par l'intermédiaire d'une membrane, le pneumatique cru afin qu'il se conforme aux surfaces de moulage. Lors de cette étape comme lors de la précédente, les projections 5 peuvent prendre appui sur les secteurs de couronne 2 par l'intermédiaire de portions des reliefs 4. Ceci est particulièrement intéressant dans le cas où les projections 5 sont relativement longues et fines, c'est à dire susceptibles de fléchir sous la pression de la gomme crue. On a représenté ici le cas de projections s'étendant jusqu'au premier sillon 14 mais elles peuvent bien sûr s'étendre au delà de ce premier sillon, par exemple pour occuper toute la demi largeur de la bande de roulement en s'appuyant éventuellement sur plusieurs reliefs tel que le relief 4 représenté. La matière de moulage est dans le même temps chauffée et entame sa vulcanisation.

On connaît des procédés de moulage sans conformation, comme par exemple les procédés de moulage sur noyau rigide. Ce type de procédé est tout à fait compatible avec celui de l'invention, par exemple en réalisant l'ensemble du moulage lors de la deuxième étape décrite à la figure 3. C'est pourquoi, la conformation n'est pas une étape indispensable du procédé de l'invention mais une étape qui peut compléter le formage commencé à la deuxième étape. Le moule et le procédé de l'invention permettent en fait de limiter la conformation nécessaire, voire de la supprimer.

La figure 5 montre la quatrième étape qui correspond au démoulage de la surface de roulement 12, afin de dégager suffisamment les reliefs 4 des sillons 14. Grâce à l'indépendance des mouvements radiaux des secteurs de couronne 2 par rapport aux secteurs d'épaule 3, cette opération n'engendre pas de contrainte mécanique particulière dans la matériau de la bande de roulement.

La figure 6 montre la dernière étape du procédé qui consiste à démouler axialement le pneumatique vulcanisé. On a représenté ici des projections 5 sensiblement axiales en forme de doigts rectilignes mais ceci n'est qu'un exemple. L'élasticité du caoutchouc lors du démoulage autorise en effet des formes de doigts variées, par exemple courbes ou possédant des formes à contre dépouille. D'autre part, ces doigts peuvent former un angle important par rapport à l'axe du pneumatique, auquel cas on peut de préférence permettre aux secteurs d'épaule 3 de tourner autour de cet axe pour faciliter le démoulage à la manière d'un tire-bouchon. Optionnellement, les doigts peuvent de plus disposer d'un degré de liberté au niveau de leur fixation individuelle sur les secteurs d'épaule afin de faciliter le démoulage. Ce degré de liberté peut par exemple être donné par une fixation élastique, ou un jeu maîtrisé.

Les figures montrent approximativement une moitié de bande de roulement 11, de sorte que les projections représentées ont sur cet exemple une longueur d'environ 15 à 20 % de la largeur de la bande de roulement. En fait, plus les projections sont longues, plus le principe de l'invention est intéressant. On peut ainsi mouler des canaux s'étendant au delà du milieu de la bande de roulement. Naturellement, des canaux plus courts sont aussi envisageables, par exemple pour réaliser un marquage latéral dans la bande de roulement qui soit plus profond et donc plus visible que ceux que l'on réalise de manière connue dans les flancs des pneumatiques.

Le nombre de doigts ou de projections 5 et de secteurs d'épaule 3 est déterminé en fonction du résultat recherché sur la bande de roulement finie. Chaque secteur peut porter plusieurs doigts ou au contraire, certains secteurs peuvent ne pas porter de doigt. En effet, leurs fonctions sont indépendantes, celle des secteurs est de permettre une expansion radiale alors que la fonction des doigts est de réaliser le moulage des canaux axiaux 15. On peut par exemple mettre en oeuvre huit secteurs d'épaule 3 par flanc portant chacun trois doigts 5.

On comprend bien également que le principe de l'invention s'applique indifféremment au cas où l'on désire mouler des canaux sur un flanc seulement ou sur les deux. La coquille opposée à la coquille 6 représenté sur les figures peut porter ou non, de façon symétrique ou non, des secteurs d'épaule tels que décrits. De même, les secteurs de couronne 2 peuvent couvrir toute la largeur de la bande de roulement à la manière décrite dans le document WO98/54009 ou seulement une partie de celle-ci.

D'une façon générale, une particularité intéressante de l'invention est d'avoir une cinématique de moulage différente de celle du démoulage. En effet, les projections ou doigts sont introduits dans la gomme crue suivant le sens de l'épaisseur de la bande de roulement et en ressortent, après moulage, suivant l'axe du pneumatique, c'est à dire le sens de la largeur de la bande de roulement. Ainsi, en adaptant l'outillage décrit plus haut, on peut mouler des bandes de roulement non annulaires, de longueur finie ou au contraire de longueur quasi-infinie en mode continu et à plat. On peut de cette manière mouler non seulement des bandes de roulement destinées à la production ou au rechapage de pneumatiques mais également mouler des chenilles en caoutchouc.

Le terme « pneumatique » désigne ici tous types de bandages élastiques, pneumatiques ou non pneumatiques, soumis en service à une pression interne ou non.

## Revendications

1. Moule (1) pour pneumatique (10) dont la bande de roulement (11) comporte une surface de roulement (12), des surfaces latérales (13), des évidements radiaux (14) débouchant à ladite surface de roulement et des évidements axiaux (15) débouchant sur l'une au moins desdites surfaces latérales, ledit moule comprenant une première série de secteurs de couronne (2) destinés à mouler les évidements radiaux (14), une deuxième série de secteurs d'épaule (3) parmi lesquels au moins certains portent des projections (5) destinées à mouler les évidements axiaux (15), les secteurs de couronne (2) étant mobiles radialement entre une configuration ouverte permettant le chargement du pneumatique cru dans le moule et une configuration fermée permettant le moulage du pneumatique, ledit moule étant **caractérisé en ce que** les secteurs d'épaule (3) sont mobiles radialement, entre la configuration ouverte et la configuration fermée, de manière indépendante des secteurs de couronne (2).

2. Moule selon la revendication 1, les projections (5) portées par les secteurs d'épaule (3) ayant la forme de doigts et s'étendant sensiblement axialement en saillie desdits secteurs.

3. Moule selon la revendication 2, lesdits doigts s'étendant axialement sur une distance supérieure à 10% de la largeur des secteurs de couronne (2).

4. Moule selon la revendication 2, lesdits doigts s'étendant axialement sur une distance supérieure à 25% de la largeur des secteurs de couronne (2).

5. Moule selon la revendication 4, lesdits doigts prenant appui, au cours du mouvement de fermeture, sur les secteurs de couronne (2).

6. Moule selon l'une des revendications précédentes, lesdits doigts s'étendant selon une direction généralement oblique par rapport à l'axe du pneumatique.

7. Moule selon la revendication 6, ladite deuxième série de secteurs d'épaule (3) étant capable d'un mouvement de rotation autour de l'axe du pneumatique.

8. Procédé de moulage d'une bande de roulement (11) comportant une surface de roulement (12), des surfaces latérales (13), des évidements axiaux (15) débouchant axialement sur l'une au moins desdites surfaces latérales, ledit procédé comprenant les étapes suivantes:
■ Introduction, dans la bande de roulement crue, des projections (5) moulant les évidements axiaux (15), puis
■ Extraction des projections (5) de la bande de roulement vulcanisée,
ledit procédé étant **caractérisé en ce que** lesdites projections (5) sont introduites dans le sens de l'épaisseur de la bande de roulement (11) et extraites dans le sens de la largeur de la bande de roulement (11).

9. Procédé de moulage d'un pneumatique selon la revendication 8 utilisant un moule selon les revendications 1 à 7 et comprenant successivement les étapes suivantes :
■ Introduction d'un pneumatique cru dans ledit moule en configuration ouverte,
■ Fermeture du moule par mouvement centripète des secteurs de couronne et secteurs d'épaule,
■ Moulage du pneumatique,
■ Ouverture du moule par mouvement radial des secteurs de couronne afin de démouler les évidements radiaux, les secteurs d'épaule demeurant sensiblement en configuration fermée,
■ Poursuite de l'ouverture par mouvement axial des secteurs d'épaule (3).

10. Procédé de moulage selon l'une des revendications 8 ou 9, le diamètre du pneumatique cru étant inférieur d'une valeur " d " au diamètre du pneumatique moulé, d étant inférieure à 1% du diamètre du pneumatique moulé.

## Claims

1. Mould (1) for a tyre (10) whose tread (11) comprises a running surface (12), lateral surfaces (13), radial recesses (14) opening on to said running surface and axial recesses (15) opening on to at least one of said lateral surfaces, said mould comprising a first series of crown sectors (2) intended for moulding the radial recesses (14), a second series of shoulder sectors (3), of which at least some bear projections (5) intended to mould the axial recesses (15), the crown sectors (2) being radially movable between an open configuration allowing loading of the uncured tyre into the mould and a closed configuration allowing moulding of the tyre, said mould being **characterised in that** the shoulder sectors (3) are movable radially between the open configuration and the closed configuration, independently of the crown sectors (2).

2. Mould according to claim 1, the projections (5) borne by the shoulder sectors (3) having the form of fingers and extending substantially axially proud of said sectors.

3. Mould according to claim 2, said fingers extending axially over a distance greater than 10% of the width of the crown sectors (2).

4. Mould according to claim 2, said fingers extending axially over a distance greater than 25% of the width of the crown sectors (2).

5. Mould according to claim 4, said fingers bearing, during the closing movement, on the crown sectors (2).

6. Mould according to one of the preceding claims, said fingers extending in a direction generally oblique to the axis of the tyre.

7. Mould according to claim 6, said second series of shoulder sectors (3) being capable of a rotary movement about the tyre axis.

8. Process for moulding a tread (11) comprising a running surface (12), lateral surfaces (13), axial recesses (15) opening out axially on to at least one of said lateral surfaces, said process comprising the following stages:
• inserting into the uncured tread projections (5) which mould the axial recesses (15),then
• removing the projections (5) from the vulcanised tread, said process being **characterised in that** said projections (5) are inserted in the direction of the thickness of the tread (11) and are extracted in the direction of the width of the tread (11).

9. Process for moulding a tyre according to claim 8 using a mould according to claims 1 to 7 and comprising successively the following stages:
• Insertion of an uncured tyre into said mould in open configuration,
• Closing of the mould by centripetal movement of the crown sectors and shoulder sectors,
• Moulding of the tyre,
• Opening of the mould by radial movement of the crown sectors in order to demould the radial recesses, the shoulder sectors remaining substantially in closed configuration,
• Continuation of opening by axial movement of the shoulder sectors (3).

10. Process for moulding according to one of claims 8 or 9, the diameter of the uncured tyre being smaller by a value "d" than the diameter of the moulded tyre, d being less than 1% of the diameter of the moulded tyre.

## Patentansprüche

1. Form (1) für einen Luftreifen (10), dessen Laufstreifen (11) eine Lauffläche (12), Seitenflächen (13), radiale Aussparungen (14), die an der Lauffläche münden, und axiale Aussparungen (15) aufweist, die an mindestens einer Seitenfläche münden, wobei die Form eine erste Reihe von Ringsektoren (2), die die radialen Aussparungen (14) formen sollen, und eine zweite Reihe von Schultersektoren (3) aufweist, von denen zumindest einige vorspringende Bauteile (5) tragen, die die axialen Aussparungen (15) formen sollen, wobei die Ringsektoren (2) in radialer Richtung zwischen einer offenen Konfiguration, die das Einbringen des rohen Luftreifens in die Form ermöglicht, und einer geschlossenen Konfiguration, bei der das Formen des Luftreifens möglich ist, beweglich sind, wobei die Form **dadurch gekennzeichnet ist, dass** die Schultersektoren (3) in radialer Richtung zwischen der offenen Konfiguration und der geschlossenen Konfiguration unabhängig von den Ringsektoren beweglich sind.

2. Form nach Anspruch 1, wobei die vorspringenden Bauteile (5), die von den Schultersektoren (3) getragen werden, die Form von Fingern haben und sich in etwa axial vorspringend von den Sektoren erstrecken.

3. Form nach Anspruch 2, wobei sich die Finger axial über eine Strecke größer als 10 % der Breite der Ringsektoren (2) erstrecken.

4. Form nach Anspruch 2, wobei sich die Finger axial über eine Strecke größer als 25 % der Breite der Ringsektoren (2) erstrecken.

5. Form nach Anspruch 4, wobei die Finger während der Schließbewegung auf den Ringsektoren (2) aufliegen.

6. Form nach einem der vorhergehenden Ansprüche, wobei sich die Finger in einer in Bezug auf die Achse des Luftreifens schrägen allgemeinen Richtung erstrecken.

7. Form nach Anspruch 6, wobei die zweite Reihe von Schultersektoren (3) zu einer Drehbewegung um die Achse des Luftreifens befähigt ist.

8. Verfahren zum Formen eines Laufstreifens (11), der eine Lauffläche (12), Seitenflächen (13) und axiale Ausnehmungen (15) aufweist, die axial an zumindest einer der Seitenflächen münden, wobei das Verfahren die folgenden Schritte umfasst:
■ Einbringen von vorspringenden Bauteilen (5), die die axialen Aussparungen (15) formen, in den rohen Laufstreifen und
■ anschließend Entnehmen der vorspringenden Bauteile (5) aus dem vulkanisierten Laufstreifen,
wobei das Verfahren **dadurch gekennzeichnet ist, dass** die vorspringenden Bauteile (5) in Richtung der Dicke des Laufstreifens (11) eingebracht und in der Richtung der Breite des Laufstreifens (11) entnommen werden.

9. Verfahren zum Formen eines Luftreifens nach Anspruch 8 unter Verwendung einer Form nach einem der Ansprüche 1 bis 7, das die aufeinander folgenden Schritte umfasst:
■ Einbringen eines rohen Luftreifens in die Form in offener Konfiguration,
■ Schließen der Form durch Zentripetalbewegung der Ringsektoren und Schultersektoren,
■ Formen des Luftreifens,
■ Öffnen der Form durch eine radiale Bewegung der Ringsektoren, um die radialen Aussparungen zu entformen,
wobei die Schultersektoren in etwa in geschlossener Konfiguration bleiben,
■ weiteres Öffnen durch eine axiale Bewegung der Schultersektoren (3).

10. Verfahren nach einem der Ansprüche 8 oder 9, wobei der Durchmesser des rohen Luftreifens einen Wert "d" unter dem Durchmesser des geformten Luftreifens liegt, wobei d unter 1 % des Durchmessers des geformten Luftreifens beträgt.
